Europäisches Patentamt

**European Patent Office**

**Office européen des brevets**

(11) Publication number: **0 241 861**
**A2**

(12) **EUROPEAN PATENT APPLICATION**

(21) Application number: **87105251.0**

(22) Date of filing: **09.04.87**

(51) Int. Cl.⁴: **G 01 N 27/90**

(30) Priority: **16.04.86 SE 8601723**

(43) Date of publication of application: **21.10.87**
**Bulletin 87/43**

(84) Designated Contracting States: **BE DE FR GB IT**

(71) Applicant: **TÖRNBLOMS KVALITETSKONTROLL AB,**
**Vikhus Rytterne, S-725 92 Västeras (SE)**

(72) Inventor: **Tornblom, Bengt Hjalmar, Vikhus Rytterne,**
**S-725 92 Vaesteras (SE)**

(74) Representative: **Boecker, Joachim, Dr.-Ing.,**
**Rathenauplatz 2-8, D-6000 Frankfurt a.M. 1 (DE)**

(54) **Device for testing and/or measurement of hot objects.**

(57) Device for testing and/or measurement of hot objects (1) with respect to a quantity, for example surface cracks, comprising at least one rotatable body (2) shaped preferably as a solid of rotation and cooled by means of a coolant, and at least one transducer (3), for example a surface transducer coil, eccentrically mounted in or on the rotatable body (2) and adapted to rotate in a circular pattern across the test object (1) or the surface thereof, and intended to be connected directly, for example via slip rings, or indirectly, for example via an inductive rotating signal transmission means, to an associated measuring and/or control means. According to the invention the coolant flow is adapted to take place via at least one tube (4) or channel, opening out into or in close proximity to the centre of the rotatable body (2), and via at least one channel (5) or tube which completely or partially surround the first-mentioned tube/channel (4) and is connected to the first-mentioned tube/channel (4) in a closed circuit, for example a path, through cooling channels/tubes (14) in the rotatable body (2).

Törnbloms Kvalitetskontroll AB
S-725 92 Västeras / Sweden

Device for testing and/or measurement of hot objects

The invention relates to a device for testing and/or measurement of hot objects according to the precharacterising part of Claim 1.

To transmit signals between a movable, for example rotating, transducer and an electronic measuring equipment stationary relative to the transducer, slip rings are normally used. However, slip rings are mechanically fragile and unstable in function, which results in deteriorated measurement properties.

The EP-A-8610'0002 describes a device which solves the afore-mentioned problems. However, the disadvantages of this device are, on the one hand, that its speed of rotation is limited because of the relatively large mechanical mass of the pendulum and, on the other hand, its relatively large overall height which, for example in the case of billet testing, may be inconvenient because of the limited space available between the strand of the billets.

A solution to the last mentioned problems is offered by the SE-A-8503894 describing a device which is useful in, for example eddy current testing and which includes the use of several carrier frequencies at the same time as, for example, in vector transformation. This device is designed for the testing and/or measurement of test objects, such as hot continuously cast billets with respect to at least one quantity, for example cracks in or on the surface of the object, or the combination of quantities. The device comprises at least one transducer, for example a surface transducer coil, a stator, a rotor, a signal transmission means and a drive means, for example a V-belt. This device has the following properties:

- the device is completely or partially based on utilizing eddy current technique;

- the movement of the transducer in relation to the test object is composed of at least two superimposed components of different velocities and movement patterns;

- at least one transducer is eccentrically located in or on the completely or partially rotating rotor, thus being rotatable about a centre;

- at least one transducer is able to move in a plane substantially parallel to the surface of the test object or a part thereof;

- the signal transmission means comprises at least one stator winding and at least one rotor winding, the rotor winding being able to rotate in relation to the stator winding;

- at least one transducer is directly or indirectly connected to the rotor winding.

One problem in connection with the afore-mentioned device is its cooling. The device provides a coolant to pass through a channel or a tube extending in the axis of rotation and from there outwards towards the transducer, which is traversed by the coolant, whereupon the coolant is thrown out into the periphery of the rotating body by means of the centrifugal force. This makes the device difficult to be materialized with a closed coolant flow, which in turn results in the device becoming orientation sensitive. As an example, it may be difficult to turn the transducer upside down for scanning the underside of a billet.

In certain cases this may be a problem. It is necessary to capture the water while at the same time the orientation of the transducer arrangement influences the mode of operation.

The invention aims at developing a device of the above-mentioned kind which avoids the problems with the open exit of the cooling liquid while at the same time insuring effective cooling of the device and allowing the rotatable body to be rotated at relatively high velocity.

To achieve this aim the invention suggests a device according to the introductory part of Claim 1, which is characterized by the features of the characterizing part of Claim 1.

Further developments of the invention are characterized by the features of the additional claims.

The device according to the invention is characterized by a closed coolant flow avoiding any problem with cooling liquid close to or on the test object. In the case of, for example, crack detection on hot continuously cast billets, it is often required that the transducer performs a very fine-meshed scanning of the billet surface in order to find and detect all cracks. To accomplish this it is advantageous, for example, to rotate an eddy current transducer at a relatively high velocity. The problem in this connection is to be able to cool the transducer and the transducer arrangement in a simple and efficient way. The above-mentioned problems with water being thrown out from the rotatable body by means of the centrifugal force are thus avoided.

With the device according to the invention, both the water inlet and the water outlet are arranged at the centre of the rotatable body, which entails great practical advantages, for example in that the orientation of the transducer may be arbitrary and in that no surrounding water capturing means is necessary. A consequence of this is also that the dimensions of the transducer arrangement can be kept small.

The combination of small dimensions and a small weight also renders the device well suited for rapid movement across the surface of the billet by means of a transducer manipulator, for example an industrial robot. This make it possible to scan a relatively large billet surface area per unit of time and transducer arrangement.

The device according to the invention is an improvement of the devices disclosed in SE-A-7507857, SE-A-7813344 and the EP-A-83903839, EP-A-84902106, EP-A-85101296 and EP-A-85101525 and constitutes an alternative to the devices of the above-referenced EP-A-86100002 and SE-A-8503894.

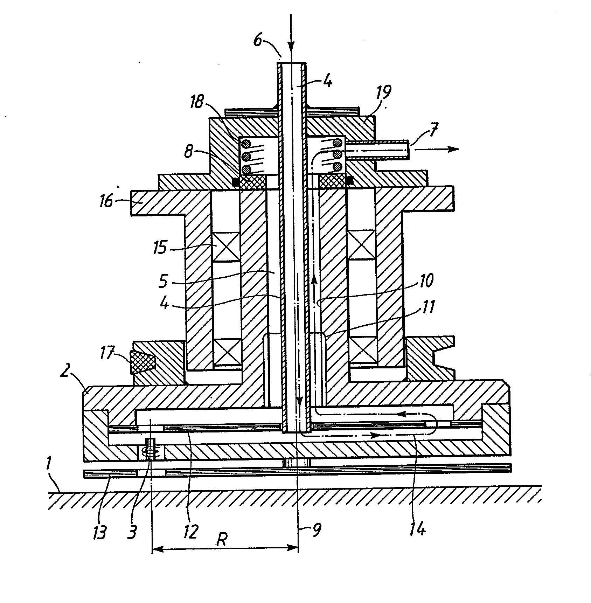

The invention will now be described in greater detail with reference to the accompanying drawing showing one embodiment of the device according to the invention.

The device is adapted to detect cracks on, for example, hot continuously cast billets 1. As mentioned above, it is often required that the transducer should perform a very fine-meshed scanning pattern of the surface of the billet 1 in order to detect all cracks. The device comprises a rotatable body 2 shaped as a solid of revolution rotating about an axis 9 and at least one transducer 3 mounted eccentrically in or on the rotatable body 2. The body 2 has a shaft-like portion 10 with a channel 5 extending along the axis of rotation, a tube 4 for a coolant being inserted into the channel 5 and opening out into the rotatable body 2. At the lower end of the tube 4 channels 14 are provided in the rotatable body 2, which channels 14 communicate with tube 4 and with the part of the channel 5 surrounding the tube 4, or with another tube or channel. Coolant is adapted to be introduced at the upper end of the tube 6, to pass through the channels 14 of the body 2, and to be transported back around the tube 4 and be discharged at an outlet 7. However, the opposite direction of transportation of the coolant may, of course, be applied as well. In close proximity to the coolant channels or tubes 14 in the rotatable body 2 there is arranged at least one transducer 3 which, of course, is provided with associated measuring and/or control means and which is completely or partially based on the use of eddy current technique. The coolant transported past and/or through the transducer 3 cools the latter and its environment. The channels in the body 2 are provided with partition walls 12 for achieving more channels and for controlling and/or distributing the coolant flow. Fixed, non-rotating connections for coolant are arranged at the end 6 of the inner tube 4, by means of the outlet 7. A seal or packing 8 is arranged at or in close proximity to the centre of the body 2 or the centre of rotation 9. The wall of the cooling channel in the shaft-like portion 10 is provided at its lower end 11 with threads or similar projections arranged to facilitate the transportation of the coolant. 13 designates a heat shield for the rotatable body, serving as protection against heat emanating from the test object 1. 15 designate bearings for the rotatable body 2, and 16 is a flange for connection of the upper part of the rotatable body 2 to a base plate or the like. 17 is a V-belt for driving the rotatable body; however, the driving may be performed in other ways, for example by means of threads or by means of built-in drive motors, etc.. 18 is a spring for pressing the packing 8 down against the rotatable body of the device. The number of tubes placed inside one another is two in the embodiment shown, but can be greater than two.

The device according to the figure is suitably provided with a water-cooled casing, which may, for example, be fixed in the base plate.

In certain cases, the test object 1 may of an oblong material, for example wire rod and so on. The test object 1 is then adapted to pass through an inner protective tube (not shown) placed inside the inner coolant tube 4.

In certain cases it may also be suitable to locate in the device, for example in the rotatable body 2, certain electronic equipment, for example for impedance matching of the transducer 3 to the signal transmission means.

By "quantity" in this description are meant for example, surface cracks, dimensional changes, position, and so on; in other words, it is an extensive concept.

The device according to the foregoing description càn be varied in many ways within the scope of the following claims.

0241861
April 6, 1987
21 857 PE/f74

CLAIMS

1. Device for testing and/or measurement of hot objects (1) with respect to a quantity, for example surface cracks, comprising at least one rotatable body (2) shaped preferably as a solid of rotation and cooled by means of a coolant, and at least one transducer (3), for example a surface transducer coil, eccentrically mounted in or on the rotatable body (2) and adapted to rotate in a circular or the like pattern across or adjacent to the test object (1) or the surface thereof, and intended to be connected directly, for example via slip rings, or indirectly, for example via an inductive rotating signal transmission means, to an associated measuring and/or control means, c h a r a c t e r i z e d  in that the coolant flow is adapted to take place via at least one tube (4) or channel, opening out into or in close proximity to the centre of the rotatable body (2), and via at least one channel (5) or tube which completely or partially surrounds the first-mentioned tube/channel (4) and is connected to the first-mentioned tube/channel (4) in a closed circuit, for example a path, through cooling channels/tubes (14) in the rotatable body (2).

2. Device according to Claim 1, c h a r a c t e r i z e d in that the connections to the first-mentioned tube/channel (4) and/or the last-mentioned channel/tube (5) are non-rotating.

3. Device according to Claim 1 or 2, c h a r a c t e r i z e d  in that the coolant is adapted to be transferred to or from the rotatable body (2) via a packing/seal (8) at or in close proximity to the centre of the rotatable body (2) or the centre of rotation (9).

4. Device according to any of the preceding Claims, c h a-
r a c t e r i z e d  in that the last-mentioned channel/tube (5) rotates along with the rotatable body (2).

5. Device according to Claim 4, c h a r a c t e r i z e d
in that the rotating part (10) of the cooling channel (5) is
completely or partially provided with threads (11) or the
like projections to facilitate the transportation of
coolant.

6. Device according to any of the preceding Claims, c h a-
r a c t e r i z e d  in that the rotatable body (2) contains channels (14), for example formed with a partition
wall (12), which control and distribute the coolant.

7. Device according to any of the preceding Claims, c h a-
r a c t e r i z e d  in that the rotatable body (2) is provided with a heat shield (13) against the test object (1).

8. Device according to any of the preceding Claims, c h a-
r a c t e r i z e d  in that the number of tubes/channels
placed inside one another is more than two.

9. Device according to any of the preceding Claims, c h a-
r a c t e r i z e d  in that in cases where the test object
(1) consists of an oblong material, such as wire, rod, etc.,
the device is arranged such that the test object passes
through an inner protective tube which is located inside the
inner coolant tube (4).